# Europäisches Patentamt

## European Patent Office

## Office européen des brevets

(19)

(11) **EP 1 160 996 A1**

(12) **EUROPÄISCHE PATENTANMELDUNG**

(43) Veröffentlichungstag:
**05.12.2001 Patentblatt 2001/49**

(51) Int Cl.⁷: **H04B 7/005**

(21) Anmeldenummer: **01102419.7**

(22) Anmeldetag: **02.02.2001**

(84) Benannte Vertragsstaaten:
**AT BE CH CY DE DK ES FI FR GB GR IE IT LI LU MC NL PT SE TR**
Benannte Erstreckungsstaaten:
**AL LT LV MK RO SI**

(71) Anmelder: **SIEMENS AKTIENGESELLSCHAFT**
**80333 München (DE)**

(72) Erfinder:
- **Dillinger, Markus**
  **81737 München (DE)**
- **Luo, Jijun**
  **81549 München (DE)**

(54) **Verfahren und Vorrichtung zum Steuern des Sendeverhaltens einer ersten Mobilfunk-Einrichtung sowie Mobilfunksystem**

(57) Ist eine angeforderte Erhöhung oder Erniedrigung der Sendeleistung einer Basisstation nicht möglich, so wird von der Basisstation "außerplanmäßig" eine Messwerte-Anforderungs-Nachricht an das Mobilfunk-Endgerät gesendet und von dem Mobilfunk-Endgerät wird aufgrund der Messwerte-Anforderungs-Nachricht eine Messwerte-Nachricht mit einer Information über die Signalqualität eines von dem Mobilfunk-Endgerät empfangenen und von der Basisstation gesendeten Signals enthalten ist, an die Basisstation gesendet. Abhängig von der Messwerte-Nachricht wird das Sendeverhalten der Basisstation verändert.

**Fig. 6**

EP 1 160 996 A1

**Beschreibung**

Die Erfindung betrifft ein Verfahren und eine Vorrichtung zum Steuern des Sendeverhaltens einer ersten Mobilfunkvorrichtung sowie ein Mobilfunksystem.

Ein solches Verfahren und eine solche Vorrichtung sowie ein solches Mobilfunksystem sind aus **[1]** bekannt.

Im Rahmen eines üblichen Mobilfunk-Übertragungsverfahrens, beispielsweise gemäß dem GSM-Standard, wird ein örtlicher Bereich, in dem eine Übertragung von Mobilfunksignalen von einem ersten Mobilfunk-Endgerät zu einem zweiten Mobilfunk-Endgerät möglich sein soll, in sogenannte Mobilfunk-Zellen unterteilt.

Jeweils eine Vermittlungseinheit (**M**obile **S**witching **C**enter, MSC) ist für die Vermittlung von Kommunikationsverbindungen über mehrere Mobilfunk-Zellen hinweg verantwortlich, das heißt, dass die Vermittlungseinheit die einzelnen Kommunikationsverbindungen verwaltet.

In jeder Mobilfunk-Zelle ist jeweils mindestens eine Basis-empfangsstation vorhanden, mittels der Mobilfunksignale, die an ein oder mehrere Mobilfunk-Endgeräte, die sich in der jeweiligen Mobilfunk-Zelle befinden, übertragen werden.

Von der jeweiligen Basisempfangsstation werden ferner alle Mobilfunksignale, die von einem in der Mobilfunk-Zelle sich befindenden Mobilfunk-Endgerät gesendet werden, empfangen und an weitere Basisstationen anderer Zellen oder an ein weiteres Mobilfunk-Endgerät, welches sich in der gleichen Mobilfunk-Zelle befindet, weiter übertragen, so dass auf diese Weise eine Kommunikationsverbindung zwischen zwei Mobilfunk-Endgeräten bereitgestellt wird.

Aufgrund unterschiedlicher Probleme, beispielsweise aufgrund einer Vielzahl gleichzeitig gesendeter und miteinander interferierender Mobilfunksignale in einer Mobilfunk-Zelle sowie beispielsweise aufgrund von Hindernissen, die in dem Mobilfunksignal-Ausbreitungsweg des jeweiligen Mobilfunksignals vorhanden sind, kann sich die Signalqualität eines Mobilfunksignals sehr schnell erheblich verschlechtern.

Aus diesem Grund ist es beispielsweise in **[1]** vorgesehen, sowohl in der Kommunikationsrichtung ausgehend von einem Mobilfunk-Endgerät zu einer Basisstation (im Weiteren auch als Uplink bezeichnet) und/oder in einer weiteren Kommunikationsrichtung ausgehend von einer Basisstation hin zu einem Mobilfunk-Endgerät (im Weiteren auch als Downlink bezeichnet) die Sendeleistung, mit der ein Mobilfunksignal von dem jeweiligen Gerät gesendet wird, das heißt mit dem ein Mobilfunksignal beispielsweise von der Basisempfangsstation oder von einem Mobilfunk-Endgerät gesendet wird, zu verändern. Hierfür ist eine Sendeleistungs-Steuerung vorgesehen, um eine plötzlich auftretende Reduktion der Signalqualität möglichst schnell wieder beheben zu können.

Die Signalleistungs-Steuerung sollte ausreichend schnell sein, um beispielsweise Signalschwankungen aufgrund von Mehrwegeausbreitungen (Rayleigh-Fading) und andere Ausbreitungsverluste zu vermeiden bzw. möglichst schnell zu kompensieren.

Im Rahmen der Signalleistungs-Steuerung ist es beispielsweise gemäß dem GSM-Standard, wie in **[1]** beschrieben, vorgesehen, dass von einem Mobilfunk-Endgerät mittels des sogenannten **D**edicated **P**hysical **C**ontrol **C**hannel (DPCCH) von dem jeweiligen Mobilfunk-Endgerät an die Basisempfangsstation eine Sendeleistungs-Änderungs-Anforderung übermittelt wird.

Mittels der Sendeleistungs-Änderungs-Anforderung kann von einem Mobilfunk-Endgerät somit eine Reduktion oder eine Erhöhung der Sendeleistung, mit der ein Mobilfunksignal von der Basisempfangsstation an das Mobilfunk-Endgerät gesendet wird, angefordert werden.

Wie in **[2]** beschrieben, ist es vorgesehen, dass die Sendeleistung alle 0,6667 ms von der Basisempfangsstation verändert werden kann.

Weiterhin ist es gemäß dem GSM-Standard vorgesehen, dass ein Mobilfunk-Endgerät regelmäßig, üblicherweise alle 480 ms, das heißt in der Blockwiederkehrzeit in dem sogenannten **S**low **A**ssociated **C**ontrol **C**hannel (SACCH), mindestens jedoch einmal pro Sekunde ein Messprotokoll an die Basisempfangsstation übermittelt.

Das Messprotokoll, im Weiteren auch als Messwerte-Nachricht bezeichnet, enthält Parameter, das heißt Informationen, die nicht nur die Kommunikationsverbindung mit der Basisempfangsstation, die für die jeweils der aktuellen Mobilfunk-Zelle zuständig ist, in der sich das entsprechende Mobilfunk-Endgerät befindet, sondern auch die Funkbedingungen zu Mobilfunk-Nachbarzellen charakterisieren, wobei diejenigen Mobilfunk-Nachbarzellen üblicherweise berücksichtigt werden, die möglicherweise im Fall eines Handovers als Ziel-Mobilfunk-Zelle des Handovers in Betracht kommen.

Im Weiteren werden als Handover sowohl ein sogenannter Interzellen-Handover, das heißt ein Funkzonenwechsel von einer Mobilfunk-Zelle in eine andere Mobilfunk-Zelle, während einer Kommunikationsverbindung als auch eine sogenannte Interfrequenz-Handover verstanden, das heißt ein Funkfrequenzwechsel für eine Kommunikationsverbindung innerhalb einer Mobilfunk-Zelle.

Im Downlink kann es vorkommen, dass eine empfangene Sendeleistungs-Änderungs-Anforderung nicht von der Basisempfangsstation bedient werden kann, das heißt, dass der Sendeleistungs-Änderungs-Anforderung nicht Folge geleistet werden kann, da die Basisempfangsstation eine minimale sowie eine maximale Sendeleistung aufweist.

Die Basisempfangsstation darf ein Mobilfunksignal nicht mit einer geringeren Sendeleistung aussenden als mit der minimalen Sendeleistung und sie darf ein Mobilfunksignal nicht mit einer Sendeleistung aussenden, die größer ist als die maximale Sendeleistung.

Sendet die Basisempfangsstation mit der minimalen Sendeleistung oder mit der maximalen Sendeleistung und wird aufgrund der Signalleistungs-Änderungs-Anforderung eine Reduktion bzw. eine Erhöhung der Sendeleistung angefordert, so kann die Basisstation dies nicht durchführen, da sonst die oben beschriebene Rahmenbedingung nicht mehr eingehalten werden kann.

Für einen solchen Fall ist gemäß **[1]** oder **[2]** keine Reaktion der Basisstation vorgesehen, das heißt die Basisstation würde aufgrund einer solchen Sendeleistungs-Änderungs-Anforderung die Kommunikationsverbindung üblicherweise abbrechen.

Ein Abbruch einer Kommunikationsverbindung in einem solchen Fall ist für den Benutzer eines Mobilfunk-Endgeräts sehr unangenehm und führt zu einer erheblichen Verringerung der Benutzerakzeptanz.

Somit liegt der Erfindung das Problem zugrunde, das Sendeverhalten einer Mobilfunk-Einrichtung in flexiblerer Weise zu steuern, als dies gemäß dem Stand der Technik möglich ist.

Das Problem wird durch das Verfahren und die Vorrichtung zum Steuern des Sendeverhaltens einer ersten Mobilfunk-Einrichtung sowie durch das Mobilfunksystem mit den Merkmalen gemäß den unabhängigen Patentansprüchen gelöst.

Bei einem Verfahren zum Steuern des Sendeverhaltens einer ersten Mobilfunk-Einrichtung wird von der ersten Mobilfunk-Einrichtung überprüft, ob eine angeforderte Änderung der Sendeleistung gemäß einer Sendeleistungs-Änderungs-Anforderung überhaupt zulässig ist.

Mit der Sendeleistungs-Änderungs-Anforderung wird somit eine Änderung der Sendeleistung, mit der ein Mobilfunksignal von der ersten Mobilfunk-Einrichtung gesendet wird, angefordert.

Die Zulässigkeitsprüfung erfolgt unter Berücksichtigung eines vorgegebenen Zulässigkeitskriteriums. Ist das Zulässigkeitskriterium erfüllt, das heißt ist eine Änderung gemäß der Sendeleistungs-Änderungs-Anforderung möglich, so wird das Sendeverhalten der ersten Mobilfunk-Einrichtung gemäß der Sendeleistungs-Änderungs-Anforderung verändert. Ist jedoch aufgrund des Vergleichs mit dem Zulässigkeitskriterium das Ergebnis ermittelt worden, dass eine Änderung nicht zulässig wäre, so wird von der ersten Mobilfunk-Einrichtung eine Messwerte-Anforderungs-Nachricht an eine zweite Mobilfunk-Einrichtung übertragen, vorzugsweise an die zweite Mobilfunk-Einrichtung, von der die entsprechende Sendeleistungs-Änderungs-Anforderung an die erste Mobilfunk-Einrichtung gesendet worden ist.

Mit der Messwerte-Anforderungs-Nachricht wird von der zweiten Mobilfunk-Einrichtung eine (zusätzliche) Messwerte-Nachricht angefordert.

In der von der zweiten Mobilfunk-Einrichtung aufgrund der Messwerte-Anforderungs-Nachricht an die erste Mobilfunk-Einrichtung übermittelte Messwerte-Nachricht ist zumindest eine Information über die Signalqualität eines von der ersten Mobilfunk-Einrichtung gesendeten und von der zweiten Mobilfunk-Einrichtung empfangenen Mobilfunksignals enthalten.

Abhängig von der in der Messwerte-Nachricht enthaltenen Information über die Signalqualität wird das Sendeverhalten der ersten Mobilfunk-Einrichtung in diesem Fall verändert.

Weiterhin ist eine Vorrichtung zum Steuern des Sendeverhaltens einer ersten Mobilfunk-Einrichtung vorgesehen, die einen Prozessor aufweist, der derart eingerichtet ist, dass die oben beschriebenen Verfahrensschritte durchführbar sind.

In einem Mobilfunksystem ist eine erste Mobilfunk-Einrichtung vorgesehen, die einen Prozessor aufweist, der derart eingerichtet ist, dass die oben beschriebenen Verfahrensschritte durchführbar sind.

Weiterhin ist in dem Mobilfunksystem mindestens eine zweite Mobilfunk-Einrichtung enthalten, die ebenfalls einen Prozessor aufweist, der derart eingerichtet ist, dass folgende Verfahrensschritte durchführbar sind:

Es wird eine Sendeleistungs-Änderungs-Anforderung an die erste Mobilfunk-Einrichtung gesendet.

Aufgrund einer von der ersten Mobilfunk-Einrichtung gesendeten Messwerte-Anforderungs-Nachricht, die von der zweiten Mobilfunk-Einrichtung empfangen wurde, wird eine Information über die Signalqualität eines von der ersten Mobilfunk-Einrichtung gesendeten und von der zweiten Mobilfunk-Einrichtung empfangenen Mobilfunksignals ermittelt.

Weiterhin wird eine Messwerte-Nachricht von der zweiten Mobilfunk-Einrichtung gebildet, die eine Information über die Signalqualität enthält.

Die Messwerte-Nachricht wird in einem weiteren Schritt an die erste Mobilfunk-Einrichtung gesendet.

Die Erfindung kann anschaulich darin gesehen werden, dass für den Fall, dass einer angeforderten Sendeleistungs-Änderung durch die erste Mobilfunk-Einrichtung, vorzugsweise einer Basisempfangsstation einer Mobilfunk-Zelle, nicht gefolgt werden kann, eine "außerplanmäßige" Messwerte-Nachricht von einem oder mehreren Mobilfunk-Endgeräten, die sich in der Mobilfunk-Zelle, die die erste Mobilfunk-Einrichtung versorgt, angefordert werden. Aufgrund der unmittelbar von dem oder den zweiten Mobilfunk-Einrichtungen ermittelten und an die erste Mobilfunk-Einrichtung übertragenen Messwerte-Nachricht(en) wird das Sendeverhalten der ersten Mobilfunk-Einrichtung verändert.

Auf diese Weise ist es möglich, sehr schnell und flexibel auf sich ändernde Signalübertragungsbedingungen zu reagieren und entsprechende gewünschte Maßnahmen in Echtzeit zu gewährleisten und somit erheblich schneller, als dies gemäß dem Stand der Technik aufgrund einer Messwerte-Nachricht, die von den zweiten Mobilfunk-Endgeräten lediglich alle 480 ms übertragen wird, möglich ist.

Dadurch wird die Signalqualität, die Effizienz des Sendeverhaltens sowie daraus resultierend die Benutzerakzeptanz eines solchen Mobilfunksystems erheblich erhöht.

Bevorzugte Weiterbildungen der Erfindung ergeben sich aus den abhängigen Ansprüchen.

Die erste Mobilfunk-Einrichtung ist vorzugsweise eine Mobilfunk-Basisempfangsstation, im Weiteren auch als Basisstation bezeichnet.

Die zweite Mobilfunk-Einrichtung ist gemäß einer Ausgestaltung der Erfindung ein Mobilfunk-Endgerät.

Grundsätzlich können eine beliebige Anzahl von Mobilfunk-Endgeräten in dem Verfahren berücksichtigt werden, wie im Weiteren noch näher erläutert wird.

Gemäß einer Weiterbildung der Erfindung sind unterschiedliche Zulässigkeitskriterien vorgesehen, die unabhängig voneinander oder in Verbindung miteinander überprüft und somit berücksichtigt werden können.

So ist es beispielsweise gemäß einer ersten Ausgestaltung der Erfindung vorgesehen, als Zulässigkeitskriterium zu überprüfen, ob bei Änderung der Sendeleistung in der ersten Mobilfunk-Einrichtung gemäß der Sendeleistungs-Änderungs-Anforderung ein vorgegebener maximaler Sendeleistungs-Schwellenwert überschritten würde.

Gemäß einer anderen Weiterbildung der Erfindung ist es vorgesehen, als vorgegebenes Zulässigkeitskriterium zu überprüfen, ob bei Änderung der Sendeleistung in der ersten Mobilfunk-Einrichtung gemäß der Sendeleistungs-Änderungs-Anforderung ein vorgegebener minimaler Sendeleistungs-Schwellenwert unterschritten wird.

Gemäß einer anderen Weiterbildung der Erfindung ist es ferner vorgesehen, als vorgegebenes Zulässigkeitskriterium zu überprüfen, ob bei Änderung der Sendeleistung in der ersten Mobilfunk-Einrichtung gemäß der Sendeleistungs-Änderungs-Anforderung eine vorgegebene maximale Gesamt-Sendeleistung der ersten Mobilfunk-Einrichtung überschritten würde.

In diesem Zusammenhang ist anzumerken, dass üblicherweise in einer Mobilfunk-Zelle eine maximale Gesamt-Sendeleistung vorgesehen ist, mit der maximal die Basisstation ein Mobilfunksignal an die in der Mobilfunk-Zelle sich befindenden Mobilfunksignale senden kann, wobei die Gesamt-Sendeleistung sich ergibt aus der Summe der jeweils individuellen Sendeleistungen, das heißt der Sendeleistungen, mit der jeweils ein Mobilfunksignal an ein jeweiliges Mobilfunk-Endgerät, welches sich in der Mobilfunk-Zelle befindet, gesendet wird.

Es hat sich herausgestellt, dass die oben beschriebenen Zulässigkeitskriterien als Trigger für das Aussenden der Messwerte-Anforderungs-Nachricht sehr geeignet sind.

Die Messwerte-Nachricht, die von einer oder mehreren zweiten Mobilfunk-Einrichtungen gebildet und gesendet werden, kann die Signalempfangsqualität eines von der jeweiligen zweiten Mobilfunk-Einrichtung empfangenen und von der ersten Mobilfunk-Einrichtung gesendeten Mobilfunksignals und/oder die Signalempfangsqualität eines von einer weiteren ersten Mobilfunk-Einrichtung, beispielsweise einer weiteren Basisstation einer benachbarten Mobilfunk-Zelle, gesendeten Mobilfunksignals enthalten.

Diese Informationen werden üblicherweise kontinuierlich von den Mobilfunk-Endgeräten ermittelt und stellen somit eine ohnehin auf der Seite der Mobilfunk-Endgeräte vorhandene Information dar.

Somit ist diese Ausgestaltung der Erfindung sehr einfach und kostengünstig realisierbar. Dennoch erhält die erste Mobilfunk-Einrichtung auf diese Weise alle für eine Veränderung ihres Sendeverhaltens erforderliche Information.

Das Sendeverhalten der ersten Mobilfunk-Einrichtung kann verändert werden, indem vorzugsweise

- die Datenrate, mit der die erste Mobilfunk-Einrichtung ein Mobilfunksignal aussendet, verringert wird, oder
- ein Interfrequenz-Handover von der ersten Mobilfunk-Einrichtung durchgeführt wird, so dass die erste Mobilfunk-Einrichtung anschließend ein Mobilfunksignal in einem anderen Frequenzbereich aussendet im Rahmen der für die zweite Mobilfunk-Einrichtung bereitgestellten Kommunikationsverbindung, oder
- ein Interzellen-Handover von der ersten Mobilfunk-Einrichtung durchgeführt wird, so dass anschließend eine weitere Mobilfunk-Einrichtung ein Mobilfunksignal an die zweite Mobilfunk-Einrichtung im Rahmen der für die zweite Mobilfunk-Einrichtung bereitgestellten Kommunikationsverbindung aussendet.

Vorzugsweise wird zunächst geprüft, ob für die jeweilige Kommunikationsverbindung die Verminderung der Datenrate, mit der die erste Mobilfunk-Einrichtung das Mobilfunksignal im Rahmen der Kommunikationsverbindung aussendet, verringert werden kann. Ist dies möglich, so wird die Datenrate verringert. Ist dies jedoch nicht möglich, so wird vorzugsweise von der ersten Mobilfunk-Einrichtung weiterhin geprüft, ob ein Interfrequenz-Handover innerhalb der gleichen Mobilfunk-Zelle durchgeführt werden kann. Ist dies möglich, so wird das Interfrequenz-Handover durchgeführt. Ist dies jedoch nicht möglich, so wird ein Interzellen-Handover zu einer Basisstation einer benachbarten Mobilfunk-Zelle durchgeführt.

Auf diese Weise wird eine qualitativ sehr hochwertige und individuelle Berücksichtigung der einzelnen Kommunikationsverbindungen ermöglicht, was zu einer erheblichen Verbesserung der Signalqualität im Rahmen einer Kommunikationsverbindung führt.

Wie oben beschrieben wurde, ist es gemäß einer weiteren Ausgestaltung der Erfindung vorgesehen, dass für den Fall, dass die angeforderte Änderung der Sendeleistung nicht zulässig ist, von der Basisstation eine oder jeweils eine Messwerte-Anforderungs-Nachricht an mehrere zweite Mobilfunk-Einrichtungen, das heißt vorzugsweise an mehrere Mobilfunk-Endgeräte übertragen wird, mit der jeweils eine Messwerte-Nachricht von der jeweiligen zweiten Mobilfunk-Einrichtung angefordert wird.

In der jeweiligen Messwerte-Nachricht ist eine Information über die Signalqualität eines von der ersten Mobilfunk-Einrichtung gesendeten und von der jeweiligen zweiten Mobilfunk-Einrichtung empfangenen Mobilfunksignals enthalten. Abhängig von den empfangenen Messwerte-Nachrichten und somit abhängig von den Informationen über die Signalqualität der jeweiligen Mobilfunksignale, wie sie von den zweiten Mobilfunk-Einrichtungen empfangen werden, wird das Sendeverhalten der ersten Mobilfunk-Einrichtung verändert.

In diesem Zusammenhang ist es vorteilhaft, das Sendeverhalten von Mobilfunksignalen vorzugsweise in der Reihenfolge zu verändern, dass zunächst die Kommunikationsverbindungen berücksichtigt werden, deren Signalqualität am schlechtesten ist und sukzessive die Mobilfunk-Kommunikationsverbindungen berücksichtigt werden mit jeweils sukzessiv verbesserter Signalqualität der jeweils empfangenen Mobilfunksignale.

Auf diese Weise wird gewährleistet, dass jeweils die aus qualitativer Sicht kritischsten Kommunikationsverbindungen sofort berücksichtigt werden und gerade bei den qualitativ schlechtesten Kommunikationsverbindungen versucht wird, eine Verbesserung der Signalqualität im Rahmen der bereitgestellten Kommunikationsverbindung zu erreichen.

Die Erfindung kann grundsätzlich in jedem beliebigen Mobilfunk-Übertragungsverfahren eingesetzt werden, vorzugsweise in einem Mobilfunk-Übertragungsverfahren gemäß einem der folgenden Standards:

- GSM-Standard,
- G3PP-Standard,
- GPRS-Standard,
- EDGE-Standard, oder
- UMTS-Standard.

Ein Ausführungsbeispiel der Erfindung ist in den Figuren dargestellt und wird im Weiteren näher erläutert.
Es zeigen

Figur 1 ein Blockdiagramm, in der ein Kommunikationssystem, welches gemäß dem GSM-Standard ausgestattet ist, dargestellt ist;

Figuren 2a und 2b eine Skizze des Aufbaus eines Zeitschlitzes gemäß dem DPDCH (Figur 2a) bzw. gemäß dem DPCCH (Figur 2b);

Figur 3 eine Skizze, anhand der die Veränderungen der Sendeleistung einer Basisstation dargestellt ist;

Figur 4 eine Skizze mehrerer Mobilfunk-Zellen mit in den Mobilfunk-Zellen sich befindenden Mobilfunk-Endgeräten;

Figur 5 eine Skizze einer Mobilfunk-Zelle mit einer Basisstation und sich in der Mobilfunk-Zelle befindenden Mobilfunk-Endgeräten, anhand der der Nachrichtenfluss gemäß einem Ausführungsbeispiel der Erfindung dargestellt ist;

Figur 6 ein Ablaufdiagramm, mittels dem die einzelnen Verfahrensschritte des Verfahrens gemäß einem Ausführungsbeispiel der Erfindung dargestellt sind; und

Figur 7 ein Nachrichten-Flussdiagramm gemäß einem Ausführungsbeispiel der Erfindung.

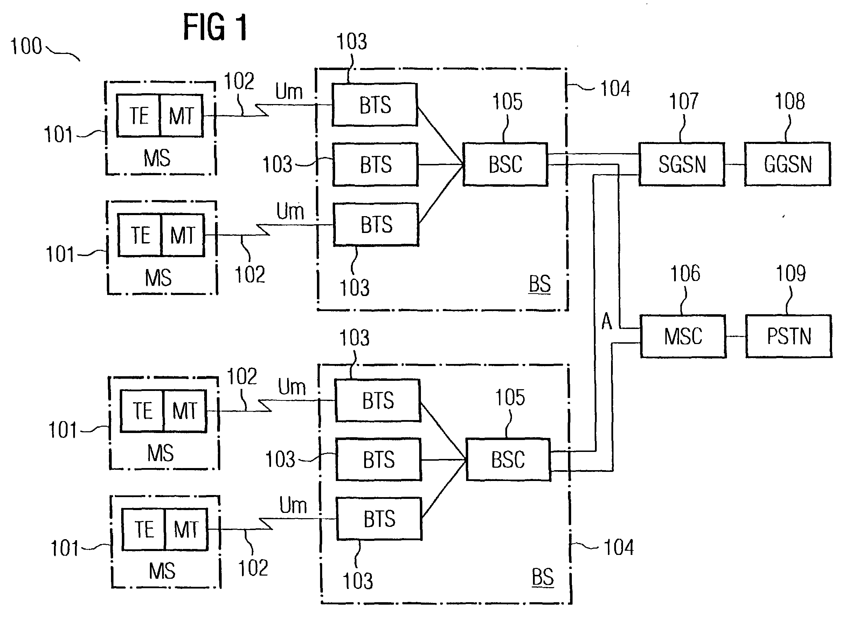

**Fig.1** zeigt ein Kommunikationssystem 100 mit einer Vielzahl von mobilen Kommunikations-Endgeräten 101, die jeweils über eine Luftschnittstelle 102, das heißt eine Funkverbindung, mit einer Basis-Empfangsstation (**B**ase **T**ransceiving **S**tation (BTS)) 103, im Weiteren auch als Basisstation bezeichnet, verbunden sind, welche jeweils einem Basisstationssystem 104 (**B**ase **S**tation **S**ystem, BSS) zugeordnet sind, wobei jeweils eine Basiskontrollstation (**B**ase **S**tation **C**ontroller, BSC) 105 für jedes Basisstationssystem 104 vorgesehen ist zur Steuerung der in dem Basisstationssystem 104 enthaltenen Basisstation(en) 103.

Zumindest ein Teil der Basisstationssysteme 104 des Kommunikationssystems 100 sind gemäß dem GSM / GPRS / EDGE-Standard mit einem mobilen Vermittlungszentrum 106 (**M**obile **S**witching **C**enter, MSC) zur Vermittlung leitungsgebundener Sprache oder Daten sowie mit einem SGSN 107 (**S**erving **G**PRS **S**upport **N**ode) zur Übermittlung von Paketdaten an ein Paketdatennetz 108 verbunden. Das mobile Vermittlungszentrum 106 ist mit einem üblichen Telefonnetz 109 verbunden.

Die zentrale Vermittlungsstelle 106 bzw. der SGSN 107 führt für die Vermittlung von Kommunikationsverbindungen erforderliche Funktionen für den Betrieb der mobilen Kommunikations-Endgeräte 101 in den jeweiligen Gruppen von Basisstationssystemen 104, für die jeweils ein mobiles Vermittlungszentrum 106 bzw. der SGSN 107 "zuständig" ist, durch.

Die Funktionen, die das mobile Vermittlungszentrum 106 bzw. der SGSN 107 bereitstellt, enthalten u.a.

- das Routing und die Steuerung von Anrufen, das heißt Kommunikationsverbindungen,
- Verfahren, die für das Zusammenwirken mit anderen Kommunikations-Netzwerken, beispielsweise einem Festnetz wie PSTN, ISDN,
- Verfahren zum Aktualisieren der Einträge der Kommunikations-Endgeräte, während sie von einer Mobilfunk-Zelle in eine andere übergehen, etc.

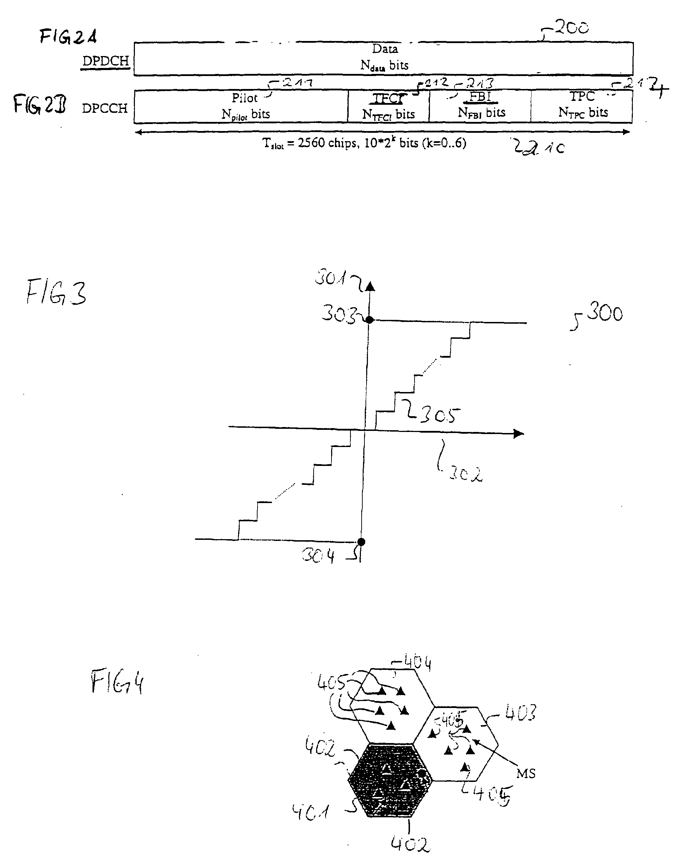

Gemäß diesem Ausführungsbeispiel wird im Rahmen der Sendeleistungs-Steuerung ein Uplink-Kanal **D**edicated **P**hysical **D**ata **C**hannel (DPDCH) verwendet, der in seinem Datenformat 200 in **Fig.2a** dargestellt ist.

Jeder Zeitschlitz 200 in dem DPDCH ermöglicht die Übertragung von $N_{Data}$ Bits als Nutzdaten für die Aufwärtsstrecke und dient zur Übertragung von Nutzdaten aus der Sicherungsschicht oder darüberliegenden Schichten des OSI-Schichtenmodells.

Gemäß dem GSM-Standard gehören zu einer Schicht-1-Verbindung das heißt zu einer Kommunikationsverbindung auf der Übertragungsschicht üblicherweise einer oder mehrere Steuerungskanäle, bezeichnet als **D**edicated **P**hysical **C**ontrol **C**hannel (DPCCH), dessen Struktur 210 in einem Zeitschlitz in **Fig.2b** dargestellt ist.

Der DPCCH ist ein physikalischer Kanal zur Steuerung der Datenübertragung zwischen zwei miteinander kommunizierenden Einheiten, das heißt der Basisstation 103 und dem Mobilfunk-Endgerät in der Bit-Übertragungsschicht für die Uplink-Kommunikationsrichtung. Über den DPCCH werden ausschließlich Informationen der Bit-Übertragungsschicht übertragen. Für jede Kommunikationsverbindung der Schicht 1 ist üblicherweise ein DPCCH vorgesehen.

Der DPCCH weist einen fest vorgegebenen Spreizfaktor gemäß dem GSM-Standard von 256 Chips pro Bit auf, das heißt er stellt eine konstante Übertragungsrate von 15 kbit/s zur Verfügung.

Der DPCCH-Burst 210 weist vier Datenfelder 211, 212, 213, 214 auf, die im Weiteren näher erläutert werden.

Ein erstes Datenfeld211 weist $N_{Pilot}$ Bits auf, die dem Empfänger, das heißt der Basisstation 103 zur Kanalschätzung dienen.

Ein zweites Datenfeld212, auch als TFCI-Feld 212 bezeichnet, ist optional und enthält, wenn vorhanden, für die Basisstation 103 Informationen über die aktuellen Transportformate der Transportkanäle, die auf dem DPDCH gemultiplext sind.

In einem dritten Datenfeld 213, welches auch als Feedback-Informations-Feld 213 bezeichnet wird, sind $N_{FBI}$ Bits vorgesehen, die eine Information bereitstellen, mit der eine Rückmeldung von dem Mobilfunk-Endgerät zu dem Kommunikationsnetz erforderlich sind. Dies sind beispielsweise Funktionen zum Übermitteln der Sende-Makrodiversität und zur Standortwahl-Makrodiversität.

In dem vierten Datenfeld 214 sind die TPC-Bits enthalten. Mit dem vierten Datenfeld 214 wird somit angegeben, ob von dem Mobilfunk-Endgerät eine Erhöhung der Sendeleistung oder eine Verringerung der Sendeleistung durch die Basisstation 103 angefordert wird. Aus diesem Grund wird im Weiteren das vierte Datenfeld 213 auch als Sendeleistungs-Änderungs-Anforderung 213 bezeichnet.

In **Fig.3** ist ein Sendeleistungs-Diagramm 300 dargestellt, in der eine von der Basisstation 103 eingesetzte Sendeleistung 301 zum Senden von Mobilfunksignalen an die in der jeweiligen Mobilfunk-Zelle, für die die Basisstation 103 zuständig ist, sich befindenden Mobilfunk-Endgeräte abhängig von einer Mehrzahl von Quantisierungsschritten 302 für die Sendeleistung 301 dargestellt ist.

Wie in **Fig.3** dargestellt ist, weist jede Basisstation eine maximal erlaubte Sendeleistung pro DPCH zur Übertragung von Nutzdaten auf, im Weiteren bezeichnet als maximale Sendeleistung 303.

Weiterhin ist jeder Basisstation 103 eine minimale Sendeleistung 203 zugeordnet, das heißt eine Sendeleistung 301, mit der die Basisstation 103 die Mobilfunksignale mindestens aussenden muss.

Anders ausgedrückt bedeutet dies, dass die Basisstation 103 ein Mobilfunksignal nicht mit weniger Sendeleistung als der minimalen Sendeleistung 304 aussenden darf und auch nicht mit einer größeren Sendeleistung als mit der maximalen Sendeleistung 303.

Durch den treppenförmigen Signalverlauf 305 abhängig von den Quantisierungsschritten 302 in **Fig.3** ist dargestellt, dass sich zwischen den beiden Schranken, das heißt den beiden Schwellenwerten 303, 304 (minimale Sendeleistung als unterer Schwellenwert und maximale Sendeleistung 303 als oberer Schwellenwert) in quantisierten Stufen verändert wird, jeweils aufgrund einer Sendeleistungs-Änderungs-Anforderung durch ein Mobilfunk-Endgerät.

Dies bedeutet, dass, solange eine Änderung, das heißt eine Reduktion oder eine Erhöhung der Sendeleistung um eine Stufe aufgrund einer im Weiteren erläuterten Signalleistungs-Änderungs-Anforderung nicht dazu führt, dass die veränderte Sendeleistung größer ist als die maximale Sendeleistung 303 oder nicht geringer ist als die minimale Sendeleistung 304, die Sendeleistung, mit der ein Mobilfunksignal von der Basisstation 103 gesendet wird, entsprechend verändert wird, das heißt erhöht oder erniedrigt wird.

Weiterhin ist gemäß dem GSM-Standard vorgesehen, dass jede Basisstation 103 eine Gesamt-Sendeleistung $P_T$ zugeordnet hat, die maximal von der Basisstation überhaupt zum Senden von Daten verwendet werden kann. Die Gesamt-Sendeleistung PT ergibt sich gemäß folgender Vorschrift:

$$P_T = \sum_{i=1}^{N} P_i \, , \tag{1}$$

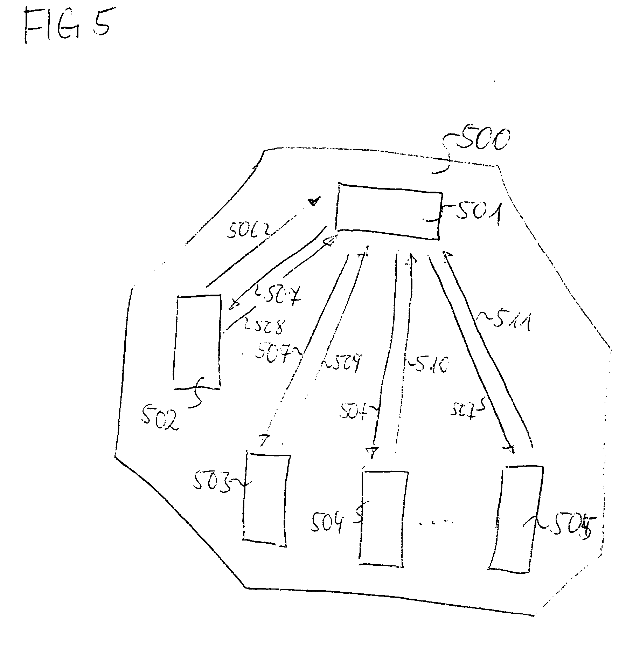

wobei mit N die gesamte Anzahl von Mobilfunk-Endgeräten bezeichnet wird, die sich in einer in **Fig.4** dargestellten Referenzzelle 401 befinden.

Die Mobilfunk-Endgeräte in der Referenzzelle 401 sind mit dem Bezugszeichen 402 bezeichnet.

Mit Pi wird die Sendeleistung für das i-te Mobilfunk-Endgerät bezeichnet und mit $P_T$ die Gesamt-Sendeleistung für die Basisstation 103.

In zu der Referenz-Mobilfunk-Zelle 401 benachbarten Mobilfunk-Zellen 403, 404 sich befindende Mobilfunk-Endgeräte sind mit dem Bezugszeichen 405 bezeichnet.

Aufgrund des hohen Datenaufkommens hat somit die Basisstation, wie oben dargestellt, eine maximale Gesamt-Sendeleistung $P_T$ für den Downlink, das heißt für die Abwärts-Kommunikationsrichtung, welche zu einer erheblichen Störung in der jeweiligen Mobilfunk-Zelle 404 in der Abwärts-Kommunikationsrichtung führt.

In **Fig.5** ist für eine Mobilfunk-Zelle 500 eine sich in der Mobilfunk-Zelle befindende Basisstation 501 dargestellt, die Kommunikationsverbindungen für Mobilfunk-Endgeräte 502, 503, 504, 505 bereitstellt.

Will ein Mobilfunk-Endgerät 502 eine Änderung der Sendeleistung der von der Basisstation 501 gesendeten Mobilfunksignale, beispielsweise weil das von dem Mobilfunk-Endgerät empfangene Mobilfunksignal eine zu schlechte Signalqualität aufweist, so sendet das Mobilfunk-Endgerät 502 eine Sendeleistungs-Änderungs-Anforderung 506 an die Basisstation 501.

Gemäß diesem Ausführungsbeispiel wird von dem Mobilfunk-Endgerät 502 eine Änderung der Sendeleistung gemäß folgender Vorschrift angefordert:

$$TPC_{up}(i) = sign(SIR_T(i) - SIR_M(i)), \tag{2}$$

wobei mit

- TPC$_{up}$ das Ereignis des Erzeugens einer Sendeleistungs-Änderungs-Anforderung im Uplink,
- $SIR_T(i)$ ein in dem Zeitschlitz i angestrebtes Signal-zuRausch-Verhältnis, und
- $SIR_M(i)$ ein in dem Zeitschlitz i tatsächlich gemessenes Signal-zu-Rausch-Verhältnis,

bezeichnet wird.

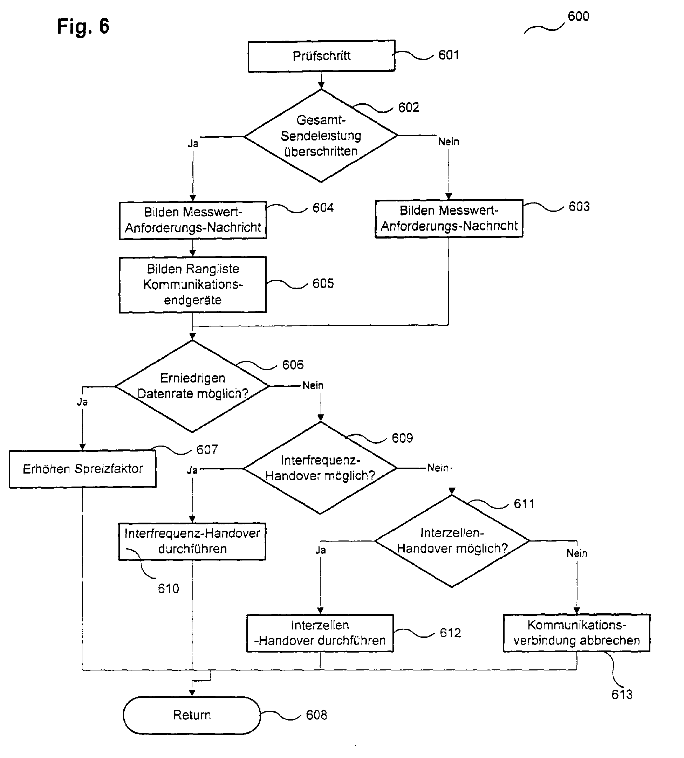

Wie in dem Ablaufdiagramm 600 in **Fig.6** dargestellt ist, wird aufgrund der Sendeleistungs-Änderungs-Anforderung 506 überprüft, ob bei einer Änderung der Sendeleistung gemäß der in der Sendeleistungs-Änderungs-Anforderung 506 beispielsweise die maximale Sendeleistung 303 überschritten oder die minimale Sendeleistung 304 unterschritten würde (Schritt 601).

Ist dies nicht der Fall, so wird, wie oben erläutert, die Sendeleistung entsprechend der Sendeleistungs-Änderungs-Anforderung 506 verändert, das heißt erhöht oder erniedrigt.

Würde jedoch eine Änderung der Sendeleistung zu einer Erhöhung der Sendeleistung über die maximale Sendeleistung 303 hinaus oder unter die minimale Sendeleistung 304 hinunter führen, so wird in einem weiteren Schritt (Schritt 602) geprüft, ob die Gesamt-Sendeleistung für die Basisstation 501 erreicht ist.

Ist dies nicht der Fall, so wird von der Basisstations-Steuerung eine Messwerte-Anforderungs-Nachricht 507 an das Kommunikationsendgerät 502 gesendet (Schritt 603). Mit der Messwerte-Anforderungs-Nachricht 507 wird von dem Mobilfunk-Endgerät 502 eine außerhalb der üblichen, in regelmäßigen Abständen von 480 ms erzeugten, Messwerte-Nachrichten eine durch die Messwerte-Anforderungs-Nachricht 507 getriggerte Ermittlung von Messwerten angestoßen.

Gemäß diesem Ausführungsbeispiel der Erfindung werden die folgenden Messwerte ermittelt und in der Messwerte-Nachricht an die Basisstation 103 übermittelt:

- die Signalempfangsqualität der zweiten Mobilfunk-Einrichtung eines von der ersten Mobilfunk-Einrichtung gesendeten Mobilfunksignals, und/oder
- die Signalempfangsqualität der zweiten Mobilfunk-Einrichtung eines von einer weiteren ersten Mobilfunk-Einrichtung gesendeten Mobilfunksignals,

Anschließend wird das Verfahren in einem im Weiteren näher beschriebenen Prüfschritt (Schritt 606) weitergeführt.

Ist die Gesamt-Sendeleistung $P_T$ durch eine Änderung der Sendeleistung gemäß der Sendeleistungs-Änderungs-Anforderung 506 überschritten, so wird auch in diesem Fall eine Messwerte-Anforderungs-Nachricht gebildet, diese jedoch an alle Mobilfunk-Endgeräte 502, 503, 504, 505, die sich in der Mobilfunk-Zelle 500 befinden, gesendet (Schritt 604).

Nach Empfang der Messwerte-Anforderungs-Nachrichten 507 werden von jedem Mobilfunk-Endgerät 502, 503, 504, 505 jeweils die oben genannten Messwerte ermittelt und in einer Messwerte-Nachricht "außerplanmäßig", angestoßen durch den Empfang der Messwerte-Anforderungs-Nachricht 507, an die Basisstation 501 als Messwerte-Nachricht 508, 509, 510, 511 gesendet.

Nach Empfang aller Messwerte-Nachrichten 508, 509, 510, 511 durch die Basisstation 501 wird von der Basisstation 501 eine Rangliste aufgestellt, abhängig von der Signalqualität, mit der jeweils ein Mobilfunk-Endgerät 502, 503, 504, 505 das von der Basisstation 501 gesendete Mobilfunksignal empfangen kann (Schritt 605).

Beginnend mit dem Mobilfunk-Endgerät 502, 503, 504, 505, welches die schlechteste Signalqualität eines empfangenen Mobilfunksignals, welches von der Basisstation 501 gesendet wird, der Basisstation mitgeteilt hat, werden sukzessive in Richtung der mit besserer Signalqualität empfangenden Mobilfunk-Endgeräte jeweils iterativ die folgenden Verfahrensschritte ab Schritt 606 durchgeführt für jede Kommunikationsverbindung mit jedem Mobilfunk-Endgerät 502, 503, 504, 505.

In dem Prüfschritt 606 wird für die jeweiligen Kommunikationsverbindungen geprüft, ob die für die Übertragung von Daten im Rahmen der Kommunikationsverbindung verwendete Datenrate erniedrigt werden kann (Schritt 606).

Ist dies der Fall, wird die Zuordnung des orthogonalen variablen Spreizfaktors (**O**rthogonal **V**ariable **S**preading **F**actor, OVSF) erhöht (Schritt 607).

Durch Erhöhen des Spreizfaktors wird es möglich, das Signal-Rausch-Verhältnis auf ungefähr 3 DB zu erhöhen.

Anschließend wird für diesen Fall entweder eine weitere Kommunikationsverbindung berücksichtigt oder das Verfahren wird beendet, was in **Fig.6** mit einem Return-Schritt (Schritt 608) symbolisiert ist.

Ist es nicht möglich, die Datenrate für die jeweilige Kommunikationsverbindung zu erniedrigen, beispielsweise weil der bereitgestellte Dienst im Rahmen dieser Kommunikationsverbindung eine höhere Priorität aufweist und eine Reduktion der Datenrate nicht zulässt, so wird in einen weiteren Prüfschritt 607 verzweigt.

In dem weiteren Prüfschritt 609 wird geprüft, ob es für die Kommunikationsverbindung möglich ist, innerhalb der Mobilfunk-Zelle 500 auf einen anderen Frequenzkanal auszuweichen, das heißt es wird geprüft, ob ein Interfrequenz-Handover möglich ist.

Die Überprüfung erfolgt gemäß dem in **[2]** beschriebenen Verfahren.

Ist ein Interfrequenz-Handover möglich, so wird in einem weiteren Schritt (Schritt 610) das Interfrequenz-Handover durchgeführt. Nach durchgeführtem Interfrequenz-Handover wird das Verfahren in dem Return-Schritt 608 weitergeführt.

Ist jedoch ein Interfrequenz-Handover in der Mobilfunk-Zelle 500 nicht möglich, so wird in einem weiteren Schritt (Schritt 611) geprüft, ob ein Interzellen-Handover möglich ist.

Ist dies möglich, so wird ein Interzellen-Handover durchgeführt (Schritt 612) und anschließend wird das Verfahren in dem Return-Schritt 608 weitergeführt.

Ist jedoch gemäß dem Prüfschritt 611 ein Interzellen-Handover nicht möglich, so wird die Kommunikationsverbindung abgebrochen (Schritt 613) und anschließend wird wiederum in den Return-Schritt 608 übergegangen.

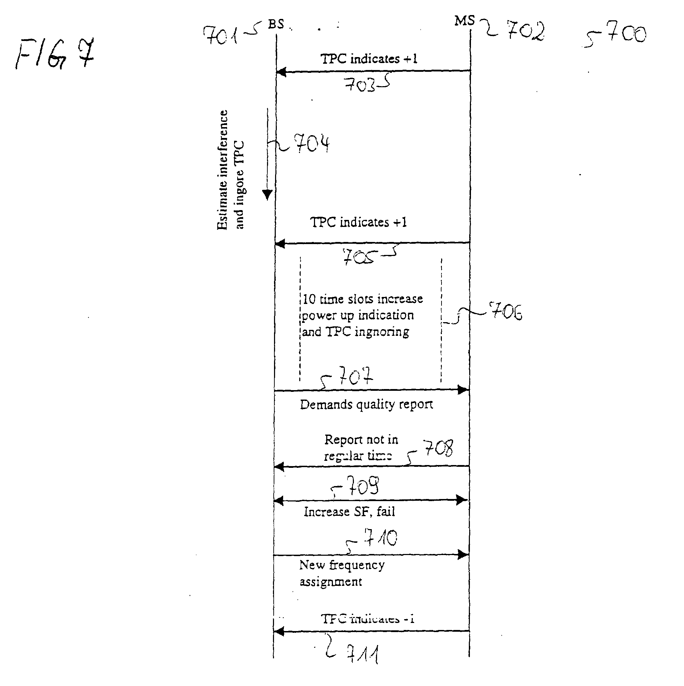

**Fig.7** zeigt zusammenfassend in einem Nachrichten-Flussdiagramm 700 den Nachrichtenfluss einer Kommunikation zwischen einer Basisstation 701 und einem Mobilfunk-Endgerät 702 gemäß diesem Ausführungsbeispiel.

In einer ersten Sendeleistungs-Änderungs-Anforderung 703 wird eine Erhöhung der Sendeleistung durch das Mobilfunk-Endgerät 702 angefordert.

Wie durch einen Pfeil 704 in **Fig.7** symbolisiert ist, wird anschließend die in der Mobilfunk-Zelle 500 zu erwartende Interferenz abgeschätzt und die Sendeleistungs-Anforderung wird ignoriert.

Aufgrund einer weiteren Sendeleistungs-Änderungs-Anforderung 705 wird gemäß diesem Ausführungsbeispiel für die Zeitdauer von zehn Zeitschlitzen (symbolisiert durch gestrichelte Linien 706), die Angabe einer geplanten Sendeleistungs-Erhöhung aktiviert und die Sendeleistungsanforderung noch ignoriert.

Anschließend wird eine Messwerte-Anforderungs-Nachricht 707 von der Basisstation 701 an das Mobilfunk-Endgerät 702 gesendet und nach erfolgter Ermittlung der Signalqualität der von der Basisstation 701 und empfangenen Mobilfunksignale und von Mobilfunksignalen die von weiteren Basisstationen beispielsweise benachbarter Mobilfunk-Zellen gesendet werden und von dem Mobilfunk-Endgerät 702 empfangen werden, wird von dem Mobilfunk-Endgerät 702 eine Messwerte-Nachricht 708 an die Basisstation 701 gesendet.

Anschließend wird, symbolisiert durch einen Doppelpfeil 709, das oben in **Fig.6** dargestellte und oben beschriebene Verfahren durchgeführt und es erfolgt beispielsweise eine Zuordnung einer neuen Frequenz, das heißt eines neuen Frequenzbereichs mittels einer Zuweisungsnachricht 710.

Anschließend wird das Verfahren, beispielsweise mit einer Sendeleistungs-Änderungs-Anforderung 711 fortgesetzt, in der beispielsweise der Erniedrigung der Sendeleistung beantragt wird.

In diesem Dokument sind folgende Veröffentlichungen zitiert:

**[1]** B. Walke, Mobilfunknetz und ihre Protokolle, Band 1, Teubner Verlag, Stuttgart, ISBN 3-519-16430-2, Seite 135 bis Seite 342, 2000

**[2]** 3GTR25.922V0.6.0, 1999/11), Third Generation Partnership Project; Technical Specification Group RAN, Working Group 2 (WG2) Radio Resource Management Strategies

**Patentansprüche**

1. Verfahren zum Steuern des Sendeverhaltens einer ersten Mobilfunk-Einrichtung,

   - bei dem überprüft wird, ob eine gemäß einer Sendeleistungs-Änderungs-Anforderung angeforderte Änderung der Sendeleistung, mit der ein Mobilfunksignal von der ersten Mobilfunk-Einrichtung gesendet wird, in der ersten Mobilfunk-Einrichtung gemäß einem vorgegebenen Zulässigkeitskriterium zulässig ist (601, 602),
   - bei dem, wenn dies der Fall ist, die Sendeleistung in der ersten Mobilfunk-Einrichtung gemäß der Sendeleistungs-Änderungs-Anforderung verändert wird,
   - bei dem, wenn dies nicht der Fall ist, von der ersten Mobilfunk-Einrichtung eine Messwerte-Anforderungsnachricht an eine zweite Mobilfunk-Einrichtung übertragen wird, mit der eine Messwerte-Nachricht von der zweiten Mobilfunk-Einrichtung angefordert wird (603, 604),
   - wobei in der Messwerte-Nachricht eine Information über die Signalqualität eines von der ersten Mobilfunk-Einrichtung gesendeten und von der zweiten Mobilfunk-Einrichtung empfangenen Signals enthalten ist, und
   - bei dem abhängig von der Information über die Signalqualität das Sendeverhalten der ersten Mobilfunk-Einrichtung verändert wird (607, 610, 612, 613).

2. Verfahren nach Anspruch 1,
   bei dem die erste Mobilfunk-Einrichtung eine Mobilfunk-Basisstation ist.

3. Verfahren nach Anspruch 1 oder 2,
   bei dem die zweite Mobilfunk-Einrichtung ein Mobilfunk-Endgerät ist.

4. Verfahren nach einem der Ansprüche 1 bis 3,
   bei dem als vorgegebenen Zulässigkeitskriterium überprüft wird, ob bei Änderung der Sendeleistung in der ersten Mobilfunk-Einrichtung gemäß der Sendeleistungs-Änderungs-Anforderung ein vorgegebener maximaler Sendeleistungs-Schwellenwert überschritten würden (601).

5. Verfahren nach einem der Ansprüche 1 bis 4,
   bei dem als vorgegebenen Zulässigkeitskriterium überprüft wird, ob bei Änderung der Sendeleistung in der ersten Mobilfunk-Einrichtung gemäß der Sendeleistungs-Änderungs-Anforderung ein vorgegebener minimaler Sendeleistungs-Schwellenwert unterschritten würde (601).

6. Verfahren nach einem der Ansprüche 1 bis 5,
   bei dem als vorgegebenen Zulässigkeitskriterium überprüft wird, ob bei Änderung der Sendeleistung in der ersten Mobilfunk-Einrichtung gemäß der Sendeleistungs-Änderungs-Anforderung eine vorgegebene maximale Gesamt-Sendeleistung der ersten Mobilfunk-Einrichtung überschritten würde (602).

7. Verfahren nach einem der Ansprüche 1 bis 6,
bei dem die Messwerte-Nachricht

- die Signalempfangsqualität der zweiten Mobilfunk-Einrichtung eines von der ersten Mobilfunk-Einrichtung gesendeten Mobilfunksignals, und/oder
- die Signalempfangsqualität der zweiten Mobilfunk-Einrichtung eines von einer weiteren ersten Mobilfunk-Einrichtung gesendeten Mobilfunksignals, enthält.

8. Verfahren nach einem der Ansprüche 1 bis 7,
bei dem das Sendeverhalten der ersten Mobilfunk-Einrichtung verändert wird, indem

- die Datenrate, mit der die ersten Mobilfunk-Einrichtung ein Mobilfunksignal aussendet verringert wird (607), oder
- ein Interfrequenz-Handover von der ersten Mobilfunk-Einrichtung durchgeführt wird, so dass die erste Mobilfunk-Einrichtung anschließend ein Mobilfunksignal in einem anderen Frequenzbereich aussendet (610), oder
- ein Interzellen-Handover von der ersten Mobilfunk-Einrichtung durchgeführt wird, so dass anschließend eine weitere Mobilfunk-Einrichtung ein Mobilfunksignal an die zweite Mobilfunk-Einrichtung aussendet (612).

9. Verfahren nach einem der Ansprüche 1 bis 8,

- bei dem das Sendeverhalten der ersten Mobilfunk-Einrichtung verändert wird, indem geprüft wird, ob die Datenrate, mit der die ersten Mobilfunk-Einrichtung ein Mobilfunksignal aussendet verringert werden kann (606),
- bei dem, wenn dies möglich ist, die Datenrate verringert wird (607), und
- bei dem, wenn dies nicht möglich ist, von der ersten Mobilfunk-Einrichtung ein Interfrequenz-Handover oder ein Interzellen-Handover durchgeführt wird (610, 612).

10. Verfahren nach Anspruch 9,

- bei dem, wenn eine Verringerung der Datenrate nicht möglich ist, überprüft wird, ob ein Interfrequenz-Handover durchgeführt werden kann (609),
- bei dem, wenn dies möglich ist, das Interfrequenz-Handover durchgeführt wird (610), und
- bei dem, wenn dies nicht möglich ist, das Interzellen-Handover durchgeführt wird (612).

11. Verfahren nach einem der Ansprüche 1 bis 10,

- bei dem für den Fall, dass die angeforderte Änderung der Sendeleistung nicht zulässig ist, von der Basisstation eine oder jeweils eine Messwerte-Anforderungsnachricht an mehrere zweite Mobilfunk-Einrichtungen übertragen wird, mit der jeweils eine Messwerte-Nachricht von der jeweiligen zweiten Mobilfunk-Einrichtung angefordert wird,
- wobei in der jeweiligen Messwerte-Nachricht eine Information über die Signalqualität eines von der ersten Mobilfunk-Einrichtung gesendeten und von der zweiten Mobilfunk-Einrichtung empfangenen Mobilfunksignals enthalten ist, und
- bei dem abhängig von den Informationen über die Signalqualität das Sendeverhalten der ersten Mobilfunk-Einrichtung verändert wird.

12. Verfahren nach einem der Ansprüche 1 bis 11,
eingesetzt in einem Mobilfunk-Übertragungsverfahren gemäß einem der folgenden Standards:

- GSM-Standard,
- G3PP-Standard,
- GPRS-Standard,
- EDGE-Standard, oder
- UMTS-Standard.

13. Vorrichtung zum Steuern des Sendeverhaltens einer ersten Mobilfunk-Einrichtung,
mit einem Prozessor, der derart eingerichtet ist, dass folgende Verfahrensschritte durchführbar sind:

- es wird überprüft, ob eine gemäß einer Sendeleistungs-Änderungs-Anforderung angeforderte Änderung der Sendeleistung, mit der ein Mobilfunksignal von der ersten Mobilfunk-Einrichtung gesendet wird, in der ersten Mobilfunk-Einrichtung gemäß einem vorgegebenen Zulässigkeitskriterium zulässig ist (601, 602),
- es wird, wenn dies der Fall ist, die Sendeleistung in der ersten Mobilfunk-Einrichtung gemäß der Sendeleistungs-Änderungs-Anforderung verändert,
- es wird, wenn dies nicht der Fall ist, von der ersten Mobilfunk-Einrichtung eine Messwerte-Anforderungsnachricht an eine zweite Mobilfunk-Einrichtung übertragen wird, mit der eine Messwerte-Nachricht von der zweiten Mobilfunk-Einrichtung angefordert (603, 604),
- wobei in der Messwerte-Nachricht eine Information über die Signalqualität eines von der ersten Mobilfunk-Einrichtung gesendeten und von der zweiten Mobilfunk-Einrichtung empfangenen Signals enthalten ist, und
- abhängig von der Information über die Signalqualität wird das Sendeverhalten der ersten Mobilfunk-Einrichtung verändert (607, 610, 612, 613).

**14.** Mobilfunksystem

mit einer ersten Mobilfunk-Einrichtung, die einen Prozessor aufweist, der derart eingerichtet ist, dass folgende Verfahrensschritte durchführbar sind:

- es wird überprüft, ob eine gemäß einer Sendeleistungs-Änderungs-Anforderung angeforderte Änderung der Sendeleistung, mit der ein Mobilfunksignal von der ersten Mobilfunk-Einrichtung gesendet wird, in der ersten Mobilfunk-Einrichtung gemäß einem vorgegebenen Zulässigkeitskriterium zulässig ist (601, 602),
- es wird, wenn dies der Fall ist, die Sendeleistung in der ersten Mobilfunk-Einrichtung gemäß der Sendeleistungs-Änderungs-Anforderung verändert,
- es wird, wenn dies nicht der Fall ist, von der ersten Mobilfunk-Einrichtung eine Messwerte-Anforderungsnachricht an eine zweite Mobilfunk-Einrichtung übertragen wird, mit der eine Messwerte-Nachricht von der zweiten Mobilfunk-Einrichtung angefordert (603, 604),
- wobei in der Messwerte-Nachricht eine Information über die Signalqualität eines von der ersten Mobilfunk-Einrichtung gesendeten und von der zweiten Mobilfunk-Einrichtung empfangenen Signals enthalten ist, und
- abhängig von der Information über die Signalqualität wird das Sendeverhalten der ersten Mobilfunk-Einrichtung verändert (607, 610, 612, 613),

mit einer zweiten Mobilfunk-Einrichtung, die einen Prozessor aufweist, der derart eingerichtet ist, dass folgende Verfahrensschritte durchführbar sind:

- es wird eine Sendeleistungs-Änderungs-Anforderung an die erste Mobilfunk-Einrichtung gesendet,
- es wird aufgrund einer von der ersten Mobilfunk-Einrichtung gesendeten Messwerte-Anforderungsnachricht eine Information über die Signalqualität eines von der ersten Mobilfunk-Einrichtung gesendeten und von der zweiten Mobilfunk-Einrichtung empfangenen Signals ermittelt, und
- es wird eine Messwerte-Nachricht mit der Information über die Signalqualität an die erste Mobilfunk-Einrichtung gesendet.

EP 1 160 996 A1

## FIG 1

FIG 2A

DPDCH

| Data $N_{data}$ bits |
| --- |

— 200

FIG 2B  DPCCH

| Pilot $N_{pilot}$ bits | TFCI $N_{TFCI}$ bits | FBI $N_{FBI}$ bits | TPC $N_{TPC}$ bits |
| --- | --- | --- | --- |

— 211  — 212  — 213  — 214

$T_{slot}$ = 2560 chips, $10*2^k$ bits (k=0..6)  221C

FIG 3

FIG 4

FIG 5

**Fig. 6**

600

Prüfschritt — 601

Gesamt-
Sendeleistung
überschritten — 602

Ja

Nein

Bilden Messwert-
Anforderungs-Nachricht — 604

Bilden Messwert-
Anforderungs-Nachricht — 603

Bilden Rangliste
Kommunikations-
endgeräte — 605

Erniedrigen
Datenrate möglich? — 606

Ja

Nein

Erhöhen Spreizfaktor — 607

Interfrequenz-
Handover möglich? — 609

Ja

Nein

Interfrequenz-Handover
durchführen

610

Interzellen-
Handover möglich? — 611

Ja

Nein

Interzellen
-Handover durchführen — 612

Kommunikationsverbindung abbrechen

613

Return — 608

FIG 7

701 ~ BS

MS 2 702    5 700

TPC indicates +1

703

Estimate interference and ingore TPC

~ 704

TPC indicates +1

705

10 time slots increase power up indication and TPC ingnoring

~ 706

707

Demands quality report

Report not in regular time    708

709

Increase SF, fail

710

New frequency assignment

TPC indicates -1

711

**Europäisches Patentamt**

**EUROPÄISCHER RECHERCHENBERICHT**

Nummer der Anmeldung

EP 01 10 2419

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int.Cl.7) |
|---|---|---|---|
| X | EP 0 790 713 A (LUCENT TECHNOLOGIES INC) 20. August 1997 (1997-08-20) * Seite 3, Zeile 27-39 * * Seite 4, Zeile 19 * * Seite 5, Zeile 1-12 * * Seite 6, Zeile 28-46 * | 1-7, 12-14 | H04B7/005 |
| Y | * Abbildung 4 * | 8-10 | |
| Y | DE 198 39 633 A (SIEMENS AG) 2. März 2000 (2000-03-02) * Spalte 2, Zeile 32-46 * * Spalte 3, Zeile 11-57 * * Spalte 6, Zeile 11-26 * | 8-10 | |
| X | WO 00 38351 A (ERICSSON TELEFON AB L M) 29. Juni 2000 (2000-06-29) * Seite 3, Zeile 5-27 * * Abbildung 3 * | 1-4, 12-14 | |
| A | US 6 064 659 A (AHMED MANSOOR ET AL) 16. Mai 2000 (2000-05-16) * Spalte 1-2 * | 1-14 | |
| A | WO 00 13362 A (HALFMANN RUEDIGER ;EICHINGER JOSEF (DE); LIEGL WERNER (DE); SIEMEN) 9. März 2000 (2000-03-09) * Seite 17, Zeile 9-32 * | 1-14 | |

**RECHERCHIERTE SACHGEBIETE (Int.Cl.7)**

H04B

Der vorliegende Recherchenbericht wurde für alle Patentansprüche erstellt

| Recherchenort | Abschlußdatum der Recherche | Prüfer |
|---|---|---|
| MÜNCHEN | 1. Juni 2001 | Kreppel, J |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus anderen Gründen angeführtes Dokument

........................................................

& : Mitglied der gleichen Patentfamilie,übereinstimmendes Dokument

EPO FORM 1503 03.82 (P04C03)

**ANHANG ZUM EUROPÄISCHEN RECHERCHENBERICHT
ÜBER DIE EUROPÄISCHE PATENTANMELDUNG NR.**

EP 01 10 2419

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

01-06-2001

| Im Recherchenbericht angeführtes Patentdokument | | Datum der Veröffentlichung | Mitglied(er) der Patentfamilie | | Datum der Veröffentlichung |
|---|---|---|---|---|---|
| EP 0790713 | A | 20-08-1997 | US | 5722051 A | 24-02-1998 |
| | | | CA | 2196114 A | 14-08-1997 |
| | | | JP | 9233021 A | 05-09-1997 |
| DE 19839633 | A | 02-03-2000 | EP | 0989767 A | 29-03-2000 |
| WO 0038351 | A | 29-06-2000 | AU | 3090500 A | 12-07-2000 |
| | | | SE | 514179 C | 15-01-2001 |
| | | | SE | 9902774 A | 19-06-2000 |
| US 6064659 | A | 16-05-2000 | BR | 9911957 A | 27-03-2001 |
| | | | EP | 1097518 A | 09-05-2001 |
| | | | WO | 0003487 A | 20-01-2000 |
| WO 0013362 | A | 09-03-2000 | KEINE | | |

EPO FORM P0461

Für nähere Einzelheiten zu diesem Anhang : siehe Amtsblatt des Europäischen Patentamts, Nr. 12/82